# EUROPEAN PATENT APPLICATION

(11) **EP 4 822 629 A1**
(43) Date of publication of application: **14.10.2026**
(21) Application number: 25169681.1
(22) Date of filing: 10.04.2025
(51) Int. Cl.: G06Q 20/32, G06Q 20/42

(54) **COMPUTING DEVICES FOR IMPROVED TRANSACTION PROCESSING**

(71) Applicant: Mastercard International, Inc., Purchase, NY 10577 (US)
(72) Inventor: SINTON, James David, Leigh-On-Sea, SS9 1JU (GB); BERIC, John, London, NW11 8NH (GB); TIERNEY, John, Merseyside, CH60 7TF (GB)
(74) Representative: Keltie LLP

(57) **Abstract**

There is provided a merchant computing device for processing a transaction between a cardholder computing device and the merchant computing device, the merchant computing device comprising: a processor; and a memory storing instructions that, when executed by the processor, cause the processor to: generate authorisation data comprising a merchant verification code; send the authorisation data to the cardholder computing device for generating an authorisation request for approval by an issuer associated with the cardholder; if the authorisation request is approved by the issuer, receive an authorisation approval comprising the authorisation data from the cardholder computing device, wherein the authorisation approval has been generated by the issuer; verify whether the authorisation data provided within the authorisation approval matches the generated authorisation data; in dependence on the match being obtained, complete the transaction. There is also provided a corresponding cardholder computing device for processing a transaction between the cardholder computing device and the merchant computing device.

## Description

### TECHNICAL FIELD

The present disclosure relates to a cardholder computing device and a merchant computing device for processing a transaction between the cardholder computing device and the merchant computing device.

### BACKGROUND

Current methods of processing a payment transaction involve generating and sending an authorisation to the issuer associated with a cardholder via a payment network. There are several technical limitations associated with sending authorisations via payment networks.

For example, the authorisation process involves multiple parties, including the merchant's acquirer, optionally a payment network (e.g., Mastercard), and the issuer. This multi-step process can introduce latency, potentially slowing down the transaction and leading to increased processing time. In addition, the authorisation process relies on the availability and performance of various networks and systems. If any part of this chain experiences issues, it can lead to transaction failures or delays.

Furthermore, in some cases, issuers may initially decline a transaction but suggest that they might approve it after additional authentication. This requires merchants to implement additional steps, such as initiating a 3D Secure (3DS) challenge or requesting the consumer to provide a PIN, which can complicate the transaction flow. Another limitation is that merchants often receive limited information about why a transaction was declined, making it difficult to take targeted action to recover the payment. Finally, failing to adhere to the rules outlined by card schemes can lead to declining authorisation rates over time.

The present disclosure has been devised to mitigate or overcome at least some of the above-mentioned problems.

### SUMMARY OF THE DISCLOSURE

According to a first aspect of the present disclosure, there is provided a merchant computing device for processing a transaction between a cardholder computing device and the merchant computing device, the merchant computing device comprising: a processor; and a memory storing instructions that, when executed by the processor, cause the processor to: generate authorisation data comprising a merchant verification code; send the authorisation data to the cardholder computing device for generating an authorisation request for approval by an issuer associated with the cardholder; if the authorisation request is approved by the issuer, receive an authorisation approval comprising the authorisation data from the cardholder computing device, wherein the authorisation approval has been generated by the issuer; verify whether the authorisation data provided within the authorisation approval matches the generated authorisation data; in dependence on the match being obtained, complete the transaction.

The memory may store instructions that, when executed by the processor, further cause the processor to: receive the authorisation approval from the cardholder computing device via a face-to-face authorisation contactless transaction.

The memory may store instructions that, when executed by the processor, further cause the processor to: validate that the cardholder computing device is genuine by performing offline data authentication via a face-to-face validation contactless transaction.

The validation contactless transaction may be performed simultaneously with the authorisation contactless transaction.

The memory may store instructions that, when executed by the processor, further cause the processor to: display the authorisation data for user input at the cardholder computing device; or display a QR code comprising the authorisation data for scanning at the cardholder computing device; or send the authorisation data to the cardholder computing device via a data contactless transaction using NFC technology.

The validation contactless transaction may be performed simultaneously with the data contactless transaction.

The merchant computing device may comprise an additional data kernel extension, wherein the additional data kernel extension may be configured to: send the authorisation data to an additional data extension at the cardholder computing device; receive the authorisation approval comprising the authorisation data from the additional data extension at the cardholder computing device; verify whether the authorisation data provided within the authorisation approval matches the generated authorisation data.

The additional data kernel extension may be configured to send and receive data to and from the additional data extension at the cardholder computing device.

The merchant computing device may comprise a contactless kernel configured to communicate with a tokenised payment application within a digital wallet of the cardholder computing device, wherein the contactless kernel may be configured to perform offline data authentication via a face-to-face validation contactless transaction.

The memory may store instructions that, when executed by the processor, further cause the processor to: send the authorisation data to the cardholder computing device using Bluetooth technology; and receive the authorisation approval from the cardholder computing device using Bluetooth technology.

The merchant computing device may check that the authorisation credential has not already been used to protect against replay attacks.

According to a second aspect of the present disclosure, there is provided a cardholder computing device for processing a transaction between the cardholder computing device and a merchant computing device, the cardholder computing device comprising: a processor; and a memory storing instructions that, when executed by the processor, cause the processor to: receive authorisation data from the merchant computing device, wherein the authorisation data comprises a merchant verification code, and wherein the authorisation data is generated at the merchant computing device; generate and send an authorisation request for approval by an issuer associated with the cardholder, wherein the authorisation request comprises the authorisation data; if the authorisation request is approved by the issuer, receive an authorisation approval comprising the authorisation data from the issuer; send the authorisation approval to the merchant computing device for verification as to whether the authorisation data provided within the authorisation approval matches the authorisation data generated at the merchant computing device; in dependence on the match being obtained, the merchant computing device being arranged to complete the transaction.

If the authorisation request is approved by the issuer, the authorisation approval may comprise an authentication code comprising the authorisation data, wherein the authentication code is generated by the issuer; and the memory may store instructions that, when executed by the processor, further cause the processor to: send the authorisation approval to the merchant computing device for validation of the authentication code.

If the authorisation request is approved by the issuer, the authorisation approval may comprise a digital signature of the authorisation data, the digital signature generated by the issuer; and the memory may store instructions that, when executed by the processor, further cause the processor to: send the authorisation approval to the merchant computing device for validation of the digital signature.

The digital signature may be generated using asymmetric cryptography.

The memory may store instructions that, when executed by the processor, further cause the processor to: send the authorisation approval to the merchant computing device via a face-to-face authorisation contactless transaction.

The cardholder computing device may comprise a digital wallet comprising an additional data extension, and the additional data extension may be configured to: receive authorisation data from an additional data kernel extension at the merchant computing device, wherein the authorisation data is generated at the merchant computing device; send an authorisation request for approval by the issuer, wherein the authorisation request comprises the authorisation data; if the authorisation request is approved by the issuer, receive an authorisation approval comprising the authorisation data from the issuer; send the authorisation approval to the additional data kernel extension at the merchant computing device for verification as to whether the authorisation data provided within the authorisation approval matches the authorisation data generated at the merchant computing device.

The additional data extension may be configured to send and receive data to and from an additional data kernel extension at the merchant computing device.

The digital wallet may be configured to store the authorisation approval in a secure location.

The digital wallet may comprise a tokenised payment application configured to communicate with a contactless kernel at the merchant computing device.

The memory may store instructions that, when executed by the processor, further cause the processor to receive the authorisation data in any of the following ways:
a) via user input;
b) via a data contactless transaction using NFC technology;
c) via scanning a QR code generated at the merchant computing device;
d) via a data contactless transaction using Bluetooth technology.

The authorisation data may comprise a purchase amount, time stamp and/or merchant ID.

The present disclosure provides technical advantages beyond the state of the art. Firstly, the present disclosure enables a transaction, such as purchase of goods or services, to be authorised using the cardholder computing device and the merchant computing device, without needing to send an authorisation via a payment network. The present disclosure enables the merchant to identify a genuine transaction that has been authorised by the cardholder's issuer simply using the cardholder computing device itself, e.g. via a mobile banking application, and mobile network capabilities. This results in faster, more efficient and more cost-effective transaction processing.

The present disclosure enables a simplified authorisation process involving a reduced number of parties, namely the issuer, the cardholder and the merchant. This reduction in number of parties involved reduces latency significantly, increasing the speed of transactions and leading to decreased processing time. In addition, since the number of systems and networks involves is reduced significantly, the authorisation process is less likely to lead to transaction failures or delays.

Furthermore, communication between parties involved is simplified, making it easier to deal with situations such as issuers requiring additional authentication. With the present disclosure, additional authentication can be provided without having to use a payment network, and this enables the transaction flow to remain simplified without having to implement additional steps, such as 3DS or a PIN.

The present disclosure also enables merchants to readily receive information about why a transaction was declined. Furthermore, with the present disclosure there is no need to adhere to the rules outlined by payment schemes, which is likely to lead to increasing authorisation rates over time.

Within the scope of this application, it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the disclosure will now be described, by way of example only, with reference to the accompanying drawings, in which:
Figure 1 is a schematic diagram showing components of a cardholder computing device and a merchant computing device, in accordance with embodiments of the present disclosure;
Figure 2 is a sequence diagram showing transaction processing where the cardholder enters the merchant verification code, in accordance with embodiments of the present disclosure;
Figure 3 is a sequence diagram showing transaction processing where the merchant verification code is transmitted via a cardholder tap, in accordance with embodiments of the present disclosure;
Figure 4 is a sequence diagram showing transaction processing where the merchant verification code is transmitted via a QR code, in accordance with embodiments of the present disclosure;
Figure 5 is a schematic diagram showing components of a cardholder computing device and a merchant computing device, in accordance with embodiments of the present disclosure;
Figure 6 is a sequence diagram showing transaction processing where the merchant verification code is transmitted via a Secure Connection, in accordance with embodiments of the present disclosure;
Figure 7 is a schematic diagram showing the hardware architecture of a mobile computing device suitable for implementing embodiments of the present disclosure;
Figure 8 is a schematic diagram showing the software architecture of a mobile computing device suitable for implementing embodiments of the present disclosure; and
Figure 9 is a schematic diagram showing a typical four-party model used in payment interactions between entities operating in a card scheme.

### DETAILED DESCRIPTION

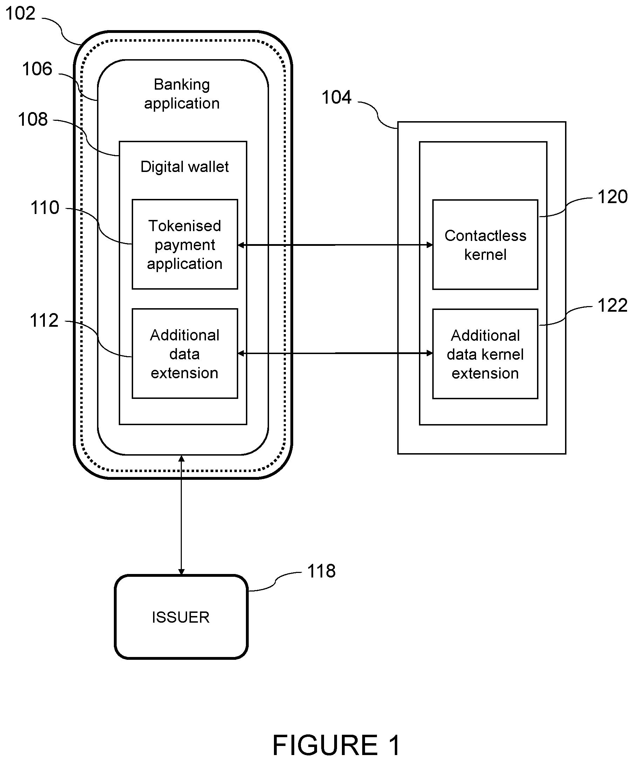

General and specific embodiments of the present disclosure are described below with reference to Figures 1 to 9.

The present disclosure relates to a cardholder computing device and a merchant computing device, the cardholder computing device and the merchant computing device being for processing a transaction initiated by a cardholder with a merchant.

The merchant computing device is for processing a transaction between a cardholder computing device and the merchant computing device. The merchant computing device comprises a processor, and a memory storing instructions that, when executed by the processor, cause the processor to: generate authorisation data comprising a merchant verification code; send the authorisation data to the cardholder computing device for generating an authorisation request for approval by an issuer associated with the cardholder; if the authorisation request is approved by the issuer, receive an authorisation approval comprising the authorisation data from the cardholder computing device, wherein the authorisation approval has been generated by the issuer; verify whether the authorisation data provided within the authorisation approval matches the generated authorisation data; in dependence on the match being obtained, complete the transaction.

The cardholder computing device is for processing a transaction between the cardholder computing device and a merchant computing device. The cardholder computing device comprises a processor; and a memory storing instructions that, when executed by the processor, cause the processor to: receive authorisation data from the merchant computing device, wherein the authorisation data comprises a merchant verification code, and wherein the authorisation data is generated at the merchant computing device; generate and send an authorisation request for approval by an issuer associated with the cardholder, wherein the authorisation request comprises the authorisation data; if the authorisation request is approved by the issuer, receive an authorisation approval comprising the authorisation data from the issuer; send the authorisation approval to the merchant computing device for verification as to whether the authorisation data provided within the authorisation approval matches the authorisation data generated at the merchant computing device; in dependence on the match being obtained, the merchant computing device being arranged to complete the transaction.

Embodiments of the present disclosure may be used for processing a transaction initiated by a cardholder with a merchant. A non-limiting example of a cardholder computing device is a smartphone. The user journey in processing a transaction, in accordance with embodiments of the present disclosure, involves the cardholder opening a banking application on a mobile device 102, entering a merchant verification code at the mobile device interface, and then tapping the mobile device 102 on the merchant device 104. The merchant verification code can be transmitted to the mobile device 102 in other ways, as will be discussed in further detail below. Following a successful authorisation response from the issuer 126, the transaction is completed and the merchant is instructed to distribute the goods. As such, the transaction process is simplified significantly.

The terms 'cardholder computing device' and 'mobile device' can be used synonymously throughout this document.

The terms 'merchant computing device' and 'merchant device' can be used synonymously throughout this document.

The terms 'authorisation credential' and 'authorisation approval' can be used synonymously throughout this document.

Components of a mobile device 102 and a merchant device 104 are shown in Figure 1, in accordance with embodiments of the present disclosure.

The mobile device 102 is NFC-enabled and comprises a banking application 106. The banking application 106 comprises a digital wallet 108. The digital wallet 108 comprises contactless digital wallet functionality such as host card emulation (e.g. MCBP). The digital wallet 108 comprises a tokenised payment application 110 (e.g. Debit Mastercard). The digital wallet 108 comprises an additional data extension 112. In alternative embodiments, the banking application 106 may comprise the additional data extension 112. The digital wallet 108 is in communication with the issuer 118.

The merchant device 104 comprises a contactless kernel 120, for example a C-2 kernel or a C-8 kernel, and an additional data kernel extension 122.

The additional data extension 112 and the additional data kernel extension 122 are utilised to pass data between the merchant device 104 and the mobile device 102, and particularly to pass data from the merchant device 104 directly to the cardholder mobile banking application 106 on the mobile device 102.

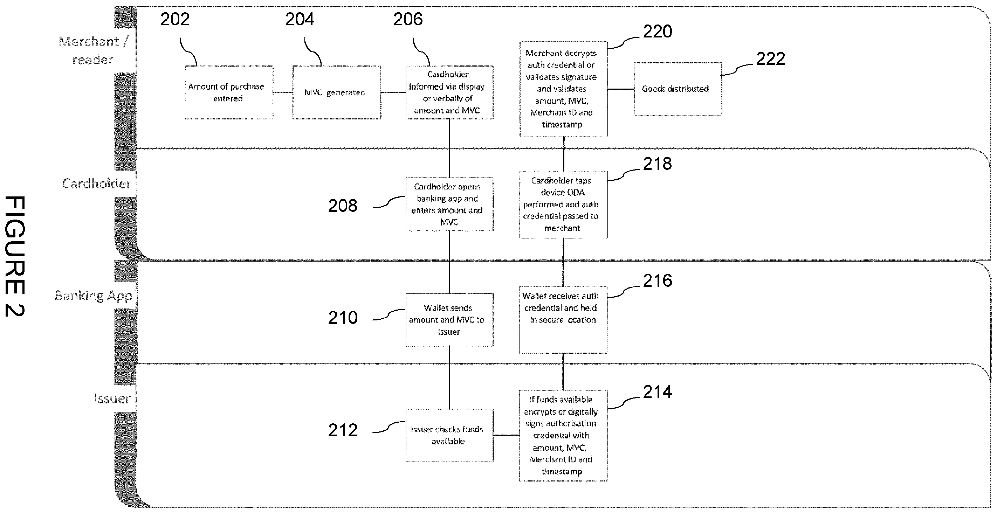

Processing of a transaction, where the cardholder enters the merchant verification code, is shown in Figure 2, in accordance with embodiments of the present disclosure.

Starting at the merchant device, the merchant enters, at Step 202, the amount associated with the purchase at the merchant device 104. The merchant device then generates, at Step 204, authorisation data comprising a random merchant verification code. The merchant informs, at Step 206, the cardholder, either via a display on the merchant device or verbally, of the amount associated with the purchase and the merchant verification code.

The cardholder then opens, at Step 208, the banking application, and enters the amount associated with the purchase and the merchant verification code. The amount may be entered using a touchscreen interface of the mobile device, or alternative input methods, such as voice interaction. The digital wallet of the banking application then sends, at Step 210, the amount and the merchant verification code to the issuer as part of an authorisation request, for approval by the issuer. The issuer checks, at Step 212, whether funds associated with the amount are available.

If funds are available, the issuer creates, at Step 214, an authorisation credential with the amount and merchant verification code. The authorisation credential can be validated by the merchant. For example, the issuer could use symmetric cryptography to create an authentication code that the merchant can verify, optionally using a Master Key diversification scheme to simplify key management. Alternatively, the issuer could use asymmetric cryptography to create a digital signature that the merchant can verify, optionally using a Public Key Infrastructure to simplify key management.

The issuer then sends, at Step 216, the authorisation credential to the digital wallet at the mobile device. The authorisation credential is held in a secure location on the mobile device.

The cardholder then taps, at Step 218, the mobile device onto the merchant device. The interaction between the mobile device and the merchant device triggers two processes to run in parallel: (i) interaction between the tokenised payment application in the digital wallet on the mobile device and the contactless kernel on the merchant device; and (ii) interaction between the additional data extension in the digital wallet and the additional data kernel extension on the merchant device.

Starting with the interaction between the tokenised payment application in the digital wallet and the contactless kernel on the merchant device, the contactless kernel exchanges command application protocol data units (APDUs) with the digital wallet and receives responses from the mobile device via the contactless interface. At the merchant device, a CDCVM-based transaction is performed. The CDCVM-based transaction comprises APDUs covering application selection, reading of data from the mobile device, and performing offline data authentication (ODA). The merchant device validates that the cardholder device is genuine by utilising existing functionality of an EMV transaction to perform ODA via a face-to-face validation contactless transaction. The transaction data from the CDCVM transaction is transmitted to the merchant device.

In parallel, the authorisation credential is obtained by the additional data extension in the digital wallet and passed from the digital wallet to the additional data kernel extension in the merchant device via a face-to-face authorisation contactless transaction. The authorisation credential allows the merchant to ensure that the issuer has approved the transaction. The authorisation credential is sent to the additional data kernel extension after offline data authentication takes place, for example, using CDA. The authorisation credential may be sent while the interaction with the tokenised payment application is taking place.

The face-to-face validation contactless transaction is therefore performed simultaneously with the authorisation contactless transaction.

The authorisation credential comprises the amount associated with the merchant and the merchant verification code. Optionally, the authorisation credential may comprise a merchant ID. Optionally, the authorisation credential may comprise a timestamp. To enhance security, the additional data kernel extension at the merchant device may only accept data from the digital wallet if CDA (Combined Data Authentication) has been successful to indicate that a genuine digital card has been tapped at the merchant device and that the transaction is linked to the DPAN stored within the digital wallet.

Next, the merchant device verifies whether the authorisation data provided within the authorisation credential matches the generated authorisation data. The merchant device, at Step 220, decrypts or validates the digital signature or authentication code of the authorisation credential. The merchant device validates the amount and the merchant verification code. The merchant device also validates the merchant ID and/or timestamp is these elements are included in the authorisation credential. As part of this validation, the merchant device checks that the merchant verification code and all other data matches the merchant verification code and other data initially provided by the merchant. Optionally, the merchant device may also check that this authorisation credential has not already been used to protect against replay attacks. Following successful validation, where the authorisation data provided within the authorisation credential matches the generated authorisation data, then the transaction is complete and the merchant device instructs, at Step 222, the merchant to distribute the goods.

As such, the transaction utilises direct interaction with the issuer, without requiring a payment network or other additional network.

In the event that the authorisation data, such as the merchant verification code, provided within the authorisation credential does not match the authorisation data generated at the merchant device, the merchant device declines the transaction.

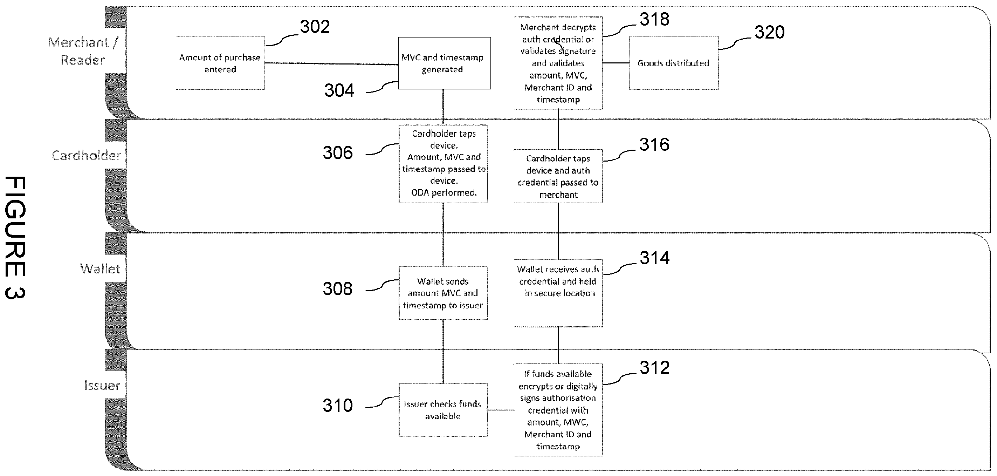

Processing of a transaction, where the merchant verification code is transmitted from the merchant device to the mobile device via a cardholder tap, is shown in Figure 3, in accordance with embodiments of the present disclosure.

Starting at the merchant device, the merchant enters, at Step 302, the amount associated with the purchase at the merchant device. The merchant device then generates, at Step 304, authorisation data comprising a random merchant verification code. Optionally, the merchant device also generates a timestamp.

The cardholder then opens the banking application and taps, at Step 306, the mobile device onto the merchant device. The interaction between the mobile device and the merchant device triggers two processes to run in parallel: (i) interaction between the tokenised payment application in the digital wallet on the mobile device and the contactless kernel on the merchant device; and (ii) interaction between the additional data extension in the digital wallet and the additional data kernel extension on the merchant device.

Starting with the interaction between the tokenised payment application in the digital wallet and the contactless kernel on the merchant device, the contactless kernel exchanges command application protocol data units (APDUs) with the digital wallet and receives responses from the mobile device via the contactless interface. At the merchant device, a CDCVM-based transaction is performed. The CDCVM-based transaction comprises APDUs covering application selection, reading of data from the mobile device, and performing offline data authentication (ODA). The merchant device validates that the cardholder device is genuine by utilising existing functionality of an EMV transaction to perform ODA via a face-to-face validation contactless transaction. The transaction data from the CDCVM transaction is transmitted to the merchant device.

In parallel, the amount and the merchant verification code are passed from the additional data kernel extension in the merchant device to the additional data extension in the mobile device. The authorisation credential allows the merchant to ensure that the issuer has approved the transaction. Optionally, the timestamp is also passed in the same way. The amount and the merchant verification code are sent to the additional data extension after offline data authentication takes place, for example, using CDA. The amount and the merchant verification code may be sent while the interaction with the tokenised payment application is taking place.

To enhance security, the additional data extension at the mobile device may only accept data from the additional data kernel extension if CDA (Combined Data Authentication) has been successful to indicate that a genuine digital card has been tapped at the merchant device and that the transaction is linked to the DPAN stored within the digital wallet.

The digital wallet of the banking application then sends, at Step 308, the amount and the merchant verification code to the issuer as part of an authorisation request, for approval by the issuer. Optionally, the digital wallet also sends the timestamp to the issuer. The issuer checks, at Step 310, whether funds associated with the amount are available.

If funds are available, the issuer creates, at Step 312, an authorisation credential with the amount and merchant verification code. The authorisation credential can be validated by the merchant. For example, the issuer could use symmetric cryptography to create an authentication code that the merchant can verify, optionally using a Master Key diversification scheme to simplify key management. Alternatively, the issuer could use asymmetric cryptography to create a digital signature that the merchant can verify, optionally using a Public Key Infrastructure to simplify key management.

The issuer then sends, at Step 314, the authorisation credential to the digital wallet at the mobile device. The authorisation credential is held in a secure location on the mobile device.

Next, the cardholder taps, at Step 316, the mobile device onto the merchant device for a second time, during which the authorisation credential is passed from the additional data extension in the mobile device to the additional data extension in the merchant device via a face-to-face authorisation contactless transaction.

The merchant device verifies whether the authorisation data provided within the authorisation credential matches the generated authorisation data. The merchant device, at Step 318, decrypts or validates the digital signature or authentication code of the authorisation credential. The merchant device validates the amount and the merchant verification code. The merchant device also validates the merchant ID and/or timestamp if these elements are included in the authorisation credential. As part of this validation, the merchant device checks that the merchant verification code and all other data matches the merchant verification code and other data initially provided by the merchant. The merchant device may also check that this authorisation credential has not already been used to protect against replay attacks. Following successful validation, where the authorisation data provided within the authorisation credential matches the generated authorisation data, the merchant device instructs, at Step 320, the merchant to distribute the goods.

As such, the transaction utilises direct interaction with the issuer, without requiring a payment scheme or other additional network.

In the event that the authorisation data, such as the merchant verification code, provided within the authorisation credential does not match the authorisation data generated at the merchant device, the merchant device declines the transaction.

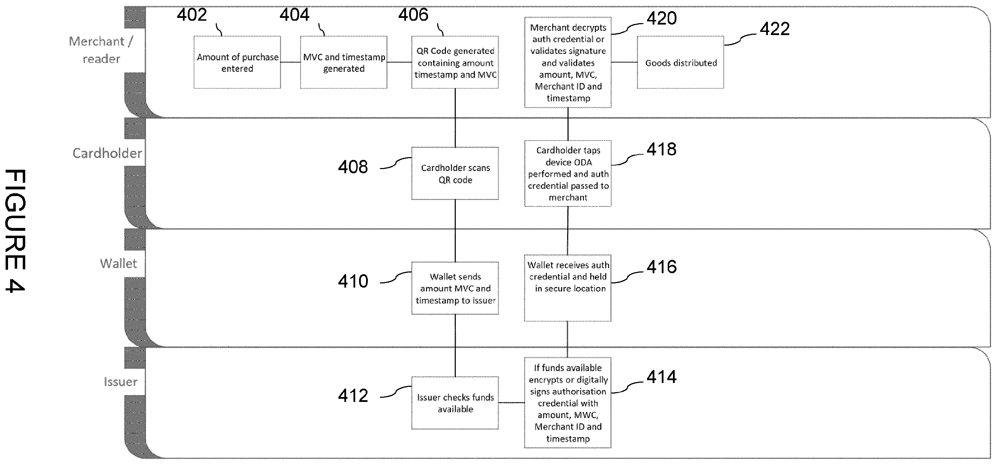

Processing of a transaction, where the merchant verification code is transmitted from the merchant device to the mobile device via a QR code, is shown in Figure 4, in accordance with embodiments of the present disclosure.

Starting at the merchant device, the merchant enters, at Step 402, the amount associated with the purchase at the merchant device. The merchant device then generates, at Step 404, authorisation data comprising a random merchant verification code. Optionally, the merchant device also generates a timestamp. The merchant device generates, at Step 406, a QR code including the amount and the merchant verification code, and optionally the timestamp.

The cardholder then scans, at Step 408, the QR code to obtain the amount and the merchant verification code, and optionally the timestamp. The digital wallet of the banking application then sends, at Step 410, the amount and the merchant verification code to the issuer as part of an authorisation request, for approval by the issuer. The issuer checks, at Step 412, whether funds associated with the amount are available. If funds are available, the issuer creates, at Step 414, an authorisation credential with the amount and merchant verification code. The authorisation credential can be validated by the merchant. For example, the issuer could use symmetric cryptography to create an authentication code that the merchant can verify, optionally using a Master Key diversification scheme to simplify key management. Alternatively, the issuer could use asymmetric cryptography to create a digital signature that the merchant can verify, optionally using a Public Key Infrastructure to simplify key management.

The issuer then sends, at Step 416, the authorisation credential to the digital wallet at the mobile device. The authorisation credential is held in a secure location on the mobile device.

The cardholder then taps, at Step 418, the mobile device onto the merchant device. The interaction between the mobile device and the merchant device triggers two processes to run in parallel: (i) interaction between the tokenised payment application in the digital wallet on the mobile device and the contactless kernel on the merchant device; and (ii) interaction between the additional data extension in the digital wallet and the additional data kernel extension on the merchant device.

Starting with the interaction between the tokenised payment application in the digital wallet and the contactless kernel on the merchant device, the contactless kernel exchanges command application protocol data units (APDUs) with the digital wallet and receives responses from the mobile device via the contactless interface. At the merchant device, a CDCVM-based transaction is performed. The CDCVM-based transaction comprises APDUs covering application selection, reading of data from the mobile device, and performing offline data authentication (ODA). The merchant device validates that the cardholder device is genuine by utilising existing functionality of an EMV transaction to perform ODA via a face-to-face validation contactless transaction. The transaction data from the CDCVM transaction is transmitted to the merchant device.

In parallel, the authorisation credential is obtained by the additional data extension in the digital wallet and passed from the digital wallet to the additional data kernel extension in the merchant device via a face-to-face authorisation contactless transaction. The authorisation credential allows the merchant to ensure that the issuer has approved the transaction. The authorisation credential is sent to the additional data kernel extension after offline data authentication takes place, for example, using CDA. The authorisation credential may be sent while the interaction with the tokenised payment application is taking place.

The face-to-face validation contactless transaction is therefore performed simultaneously with the authorisation contactless transaction.

The authorisation credential comprises the amount associated with the merchant and the merchant verification code. Optionally, the authorisation credential may comprise a merchant ID. Optionally, the authorisation credential may comprise a timestamp. To enhance security, the additional data kernel extension at the merchant device may only accept data from the digital wallet if CDA (Combined Data Authentication) has been successful to indicate that a genuine digital card has been tapped at the merchant device and that the transaction is linked to the DPAN stored within the digital wallet.

Next, the merchant device verifies whether the authorisation data provided within the authorisation credential matches the generated authorisation data. The merchant device, at Step 420, decrypts or verifies the digital signature or authentication code of the authorisation credential. The merchant device validates the amount and the merchant verification code. The merchant device also validates the merchant ID and/or timestamp is these elements are included in the authorisation credential. As part of this validation, the merchant device checks that the merchant verification code and all other data matches the merchant verification code and other data initially provided by the merchant. Optionally, the merchant device may also check that this authorisation credential has not already been used to protect against replay attacks. Following successful validation, where the authorisation data provided within the authorisation credential matches the generated authorisation data, then the transaction is complete and the merchant device instructs, at Step 422, the merchant to distribute the goods.

As such, the transaction utilises direct interaction with the issuer, without requiring a payment scheme or other network.

In the event that the authorisation data, such as the merchant verification code, provided within the authorisation credential does not match the authorisation data generated at the merchant device, the merchant device declines the transaction.

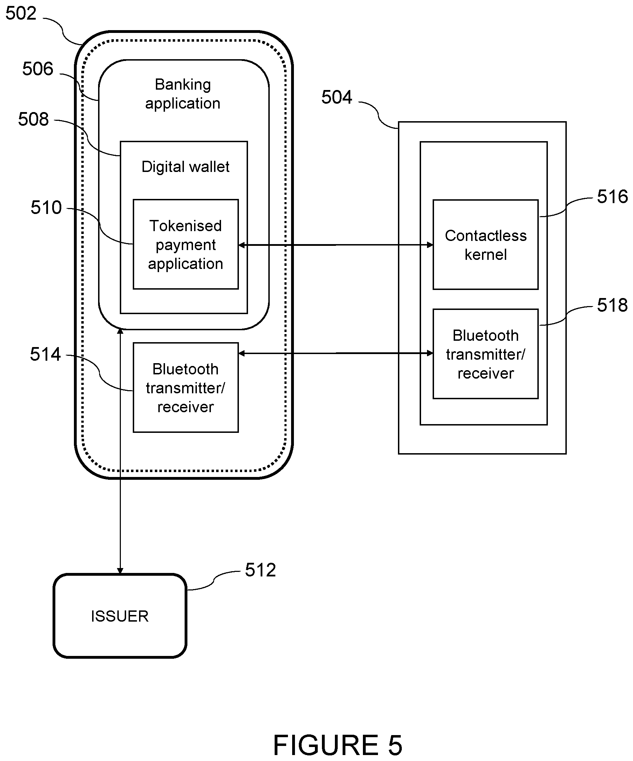

Components of a mobile device 502 and a merchant device 504 are shown in Figure 5, in accordance with further embodiments of the present disclosure.

The mobile device 502 is NFC-enabled and comprises a banking application 506. The banking application 506 comprises a digital wallet 508. The digital wallet 508 comprises contactless digital wallet functionality such as host card emulation (e.g. MCBP). The digital wallet 508 comprises a tokenised payment application 510 (e.g. Debit Mastercard). The digital wallet 508 is in communication with the issuer 512. The mobile device 502 comprises a Bluetooth transmitter/receiver 514 for transmitting and receiving Bluetooth signals via a secure connection.

The merchant device 504 comprises a contactless kernel 516, for example a C-2 kernel or a C-8 kernel, and a Bluetooth transmitter/receiver 518 for transmitting and receiving Bluetooth signals via a secure connection.

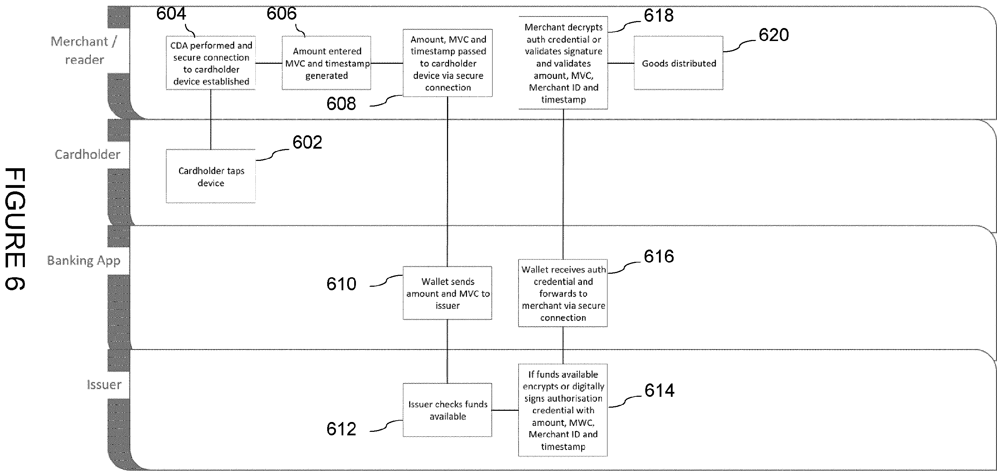

Processing of a transaction, where the merchant verification code is transmitted from the merchant device to the mobile device via a secure connection is shown in Figure 6, in accordance with embodiments of the present disclosure.

The cardholder opens the banking application and taps, at Step 602, the mobile device onto the merchant device. At the merchant device, a CDCVM-based transaction is performed, at Step 604. The CDCVM-based transaction comprises APDUs covering application selection, reading of data from the mobile device, and performing offline data authentication (ODA). The merchant device validates that the cardholder device is genuine by utilising existing functionality of an EMV transaction to perform ODA via a face-to-face validation contactless transaction using the secure connection. In parallel, a secure connection, e.g. using Bluetooth, between the merchant device and the mobile device is established. The mobile device and the merchant device are paired securely to avoid man-in-the-middle attacks.

The merchant enters, at Step 606, the amount associated with the purchase at the merchant device. The merchant device then generates authorisation data comprising a random merchant verification code. Optionally, the merchant device also generates a timestamp.

The amount and the merchant verification code are passed, at Step 608, from the merchant device to the mobile device via the secure connection. Optionally, the timestamp is also passed in the same way. The amount and the merchant verification code are sent to the mobile device after offline data authentication takes place, for example, using CDA. The amount and the merchant verification code may be sent while the interaction with the tokenised payment application is taking place.

To enhance security, the mobile device may only accept data from the merchant device if CDA (Combined Data Authentication) has been successful to indicate that a genuine digital card has been tapped at the merchant device and that the transaction is linked to the DPAN stored within the digital wallet.

The digital wallet of the banking application then sends, at Step 610, the amount and the merchant verification code to the issuer as part of an authorisation request, for approval by the issuer. Optionally, the digital wallet also sends the timestamp to the issuer. The issuer checks, at Step 612, whether funds associated with the amount are available.

If funds are available, the issuer creates, at Step 614, an authorisation credential with the amount and merchant verification code. The authorisation credential can be validated by the merchant. For example, the issuer could use symmetric cryptography to create an authentication code that the merchant can verify, optionally using a Master Key diversification scheme to simplify key management. Alternatively, the issuer could use asymmetric cryptography to create a digital signature that the merchant can verify, optionally using a Public Key Infrastructure to simplify key management.

The issuer then sends, at Step 616, the authorisation credential to the digital wallet at the mobile device via a face-to-face authorisation contactless transaction using the secure connection. The authorisation credential is held in a secure location on the mobile device.

Next, the mobile device passes the authorisation credential to the merchant device via the secure connection.

The merchant device verifies whether the authorisation data provided within the authorisation credential matches the generated authorisation data. The merchant device, at Step 618, decrypts or verifies the digital signature or authentication code of the authorisation credential. The merchant device validates the amount and the merchant verification code. The merchant device also validates the merchant ID and/or timestamp if these elements are included in the authorisation credential. As part of this validation, the merchant device checks that the merchant verification code and all other data matches the merchant verification code and other data initially provided by the merchant. The merchant device may also check that this authorisation credential has not already been used to protect against replay attacks. Following successful validation, where the authorisation data provided within the authorisation credential matches the generated authorisation data, the merchant device instructs, at Step 620, the merchant to distribute the goods.

As such, the transaction utilises direct interaction with the issuer, without requiring a payment scheme or other network.

In the event that the authorisation data, such as the merchant verification code, provided within the authorisation credential does not match the authorisation data generated at the merchant device, the merchant device declines the transaction.

### HARDWARE ARCHITECTURE OF MOBILE COMPUTING DEVICE

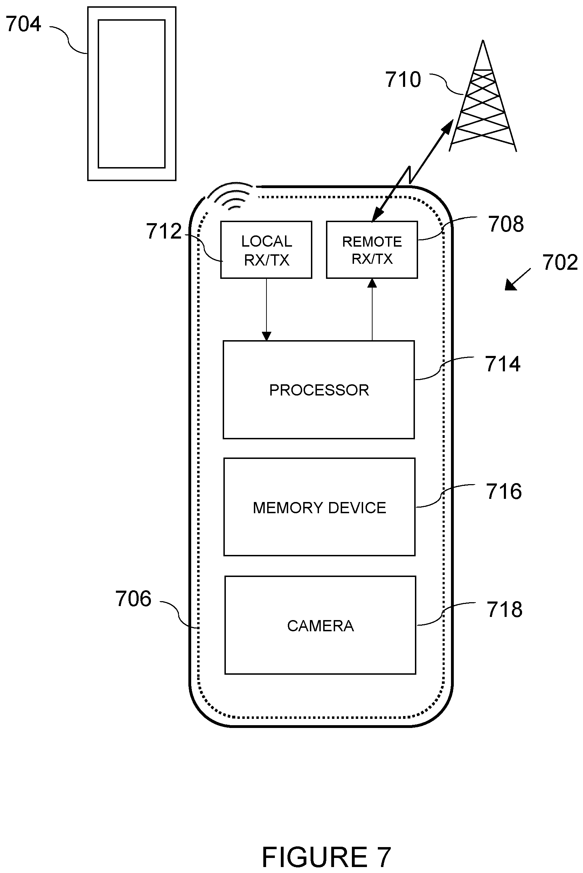

Figure 7 shows the hardware architecture of a smartphone 702 which is suitable for use with embodiments of the present disclosure. The term 'smartphone' may be used synonymously herein with 'mobile cellular telecommunications handset' or 'mobile phone' or 'mobile device'. Other mobile computing devices may be used instead of the smartphone 702. The mobile computing device may be another type of computing device such as a tablet or a laptop computer. The mobile computing device need not have cellular telecommunications capabilities (so long as some form of data connection, such as a Wi-Fi or Ethernet connection, is available).

In general, mobile computing devices comprising the hardware elements shown in the smartphone 702 of Figure 7 are suitable for use with embodiments of the present disclosure.

The smartphone 702 has a display 706 providing, in this example, a touchscreen user interface. The smartphone 702 is equipped with a remote wireless telecommunications apparatus comprising a remote transmitter/receiver 708 for communication with a wireless telecommunications network 710. The smartphone 702 is also equipped with a local wireless telecommunications apparatus comprising a local transmitter/receiver 712 for communication with a local transaction device such as a merchant device 704. For example, the local transmitter/receiver 712 may comprise an NFC receiver to enable the smartphone 702 to receive data from a merchant device 704 which is capable of transmitting data via NFC. The local transmitter/receiver 712 may also comprise an NFC transmitter for transmitting data from the smartphone 702 to the merchant device 704 or other suitable local device.

In some embodiments, the smartphone 702 has an NFC controller chip, which includes both an NFC transmitter and an NFC receiver. The NFC controller chip is configured to adhere to at least the ISO 14443 standards, and the relevant EMV application standards. The smartphone 702 further comprises a processor 714, a memory device 716, and a camera 718. The camera 718 may be used to provide biometric authentication of the cardholder.

### SOFTWARE ARCHITECTURE OF MOBILE COMPUTING DEVICE

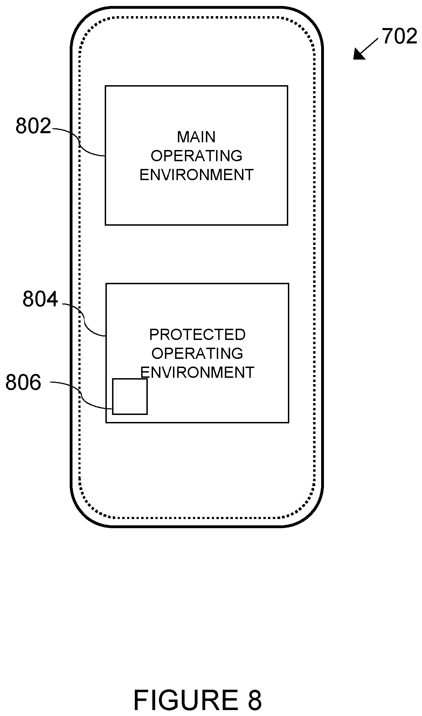

Figure 8 shows the software architecture of the smartphone 702 shown in Figure 7. The software architecture has a main operating environment 802 and a protected operating environment 804.

The main operating environment 802 may be used with a generic operating system such as iOS or Android. The main operating environment 802 comprises a mobile service application. The main operating environment 802 also comprises other applications that are normally needed by such a mobile computing device, such as a browser, a modem and a camera driver (not shown).

The protected operating environment 804 may be a Subscriber Identity Module SIM, Universal Integrated Circuit Card UICC, a Secure Element or a hardware backed Trusted Execution Environment. Alternatively, there may be a sandbox or other logically protected environment in the main operating environment to provide a secure environment. This may involve using one or more external resources to provide a secure environment.

The protected operating environment 804 may comprise a mobile banking application 806 or 'app' for making payments. The mobile banking application 806 can be accessed by a user of the smartphone 702. Alternatively, the elements relevant to the security of the mobile banking application 806 may be comprised in the protected operating environment. The mobile banking application 806 may be located within the SIM or within another physically or logically protected environment. Alternatively, some parts of the mobile banking application 806 may be situated in the protected operating environment. Further, data from the mobile banking application 802 may be located in a protected memory.

### FOUR-PARTY TRANSACTION MODEL

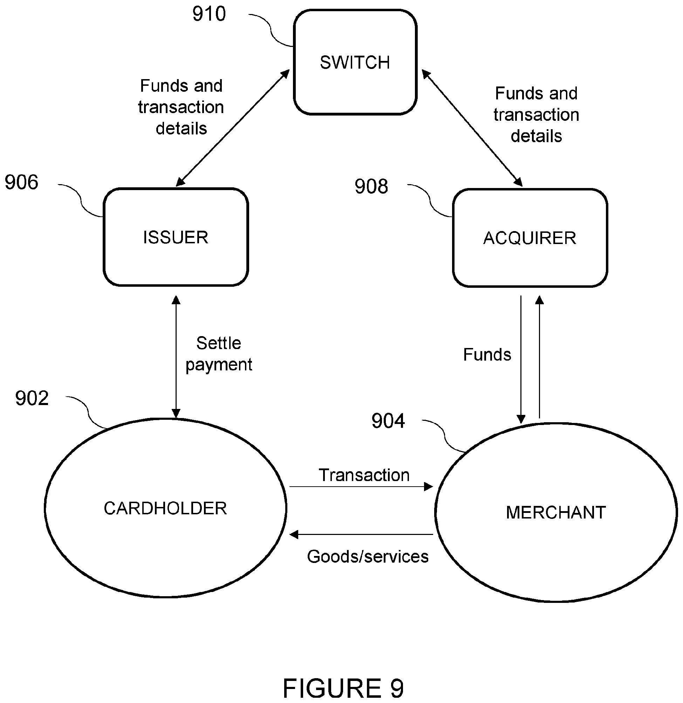

A typical four-party model used in payment interactions between entities operating in a card scheme is shown in Figure 9.

Normally, card schemes - payment networks linked to payment cards - are based on one of two models: a three-party model or a four-party model (adopted by Mastercard and others). For the purposes of this document, the four-party model is described in further detail below.

The four-party model may be used as a basis for the transaction network. For each transaction, the model comprises four entity types: cardholder 902, merchant 904, issuer 906 and acquirer 908. In this model, the cardholder 902 purchases goods or services from the merchant 904. The issuer 906 is the bank or any other financial institution that issued the card to the cardholder 902. The acquirer 908 provides services for card processing to the merchant 904.

The model also comprises a central switch 910 - interactions between the issuer 906 and the acquirer 908 are routed via the switch 910. The switch 910 enables a merchant 904 associated with one particular bank (acquirer 908) to accept payment transactions from a cardholder 902 associated with a different bank (issuer 906).

A typical transaction between the entities in the four-party model can be divided into three main stages: authorisation, clearing and settlement. The cardholder 902 initiates a purchase of goods or services from the merchant 904 using their payment card or other transaction device. Details of the card and the transaction are sent to the issuer 906 via the acquirer 908 and the switch 910 to authorise the transaction. Should the transaction be considered abnormal by the issuer 906, the cardholder 902 may be required to undergo a verification process to verify their identity and the details of the transaction. Once the verification process is complete the transaction is authorised.

On completion of the transaction between the cardholder 902 and the merchant 904, the transaction details are submitted by the merchant 904 to the acquirer 908 for clearing and settlement. Clearing is the process by which merchants 904 and their acquirers 908 submit the definitive list of transactions performed. Settlement is the final transfer of funds between parties. Clearing and settlement processes are typically determined by the network 910.

Separately, the issuer 906 and the cardholder 902 settle the payment amount between them. A service fee is paid to the acquirer 908 by the merchant 904 for each transaction, and an interchange fee is paid to the issuer 906 by the acquirer 908 in return for the settlement of funds.

In summary, for a typical transaction, the four-party model comprises four entity types: cardholder 902, merchant 904, issuer 906 and acquirer 908. In this model, the cardholder 902 purchases goods or services from the merchant 904. The issuer 906 is the bank or any other financial institution that issued the card to the cardholder 902. The acquirer 908 provides services for card processing to the merchant 904. In certain transaction types, other arrangements are possible - for example, transactions are possible where the issuer 906 and the acquirer 908 are the same entity, in which case no routing of the transaction between the two is required. Furthermore, it is possible to have a four-party model that works using only a single message (where the authorisation, clearing and settlement can all happen at the same time).

Many modifications may be made to the specific embodiments described above without departing from the scope of the invention as defined in the accompanying claims.

Features of one embodiment may also be used in other embodiments, either as an addition to such embodiment or as a replacement thereof.

The embodiments described above allow for the flow of data between merchant and cardholder device. For example, the mobile device may include a data extension and the merchant device may include a data kernel extension to allow for the flow of data between merchant and cardholder device. Alternatively, a Bluetooth connection may be used to allow for the flow of data between merchant and cardholder device. It should be understood that any suitable means for allowing for the flow of data between merchant and cardholder device may be used.

Symmetric cryptography or asymmetric cryptography may be used by the issuer to create the authorisation credential.

The merchant verification code may be randomly generated by the merchant on premises at the merchant device, or at a backend solution, e.g. a backend server.

The validation of the authorisation credential by the merchant could be performed at the merchant device, or at a backend solution, e.g. backend server. For example, if asymmetric cryptography is used, the digital signature may be validated by the merchant at the merchant device, or at a backend solution, e.g. backend server.

The clearing process in the payment transaction may be performed by utilising the existing payment network functionality, e.g. as provided by payment networks such as Mastercard, by submitting a clearing record without an authorisation. Inclusion of the authorisation credential in the clearing record may be used to prove the validity of the transaction in case of disputes.

Alternatively, the clearing process may be performed using a system such as a faster payment network, where the merchant bank details are also passed to the issuer via the banking application. The issuer may use the merchant bank details to initiate a faster payment transaction. The issuer may include the authorisation credential for matching of authorisation to funds and for additional validity checks.

### DEFINITIONS

APDU:
   Application Protocol Data Unit
   A communication unit between a contactless reader and a contactless device.
Banking application:
   A mobile software application that enables users to access their bank accounts and perform various transactions from their mobile devices.
CDA:
   Combined dynamic data authentication - a security method used in payment transactions which combines card authentication and transaction approval into a single step.
CDCVM:
   Consumer device cardholder verification method - a security feature that allows a cardholder to authenticate transactions directly on their own mobile device.
Contactless kernel:
   Software which provides a set of functions for payment acceptance devices (such as point-of-sale terminals and ATMs) to process contactless transactions.
Digital wallet:
   A software-based system that allows users to store payment information and make transactions using mobile devices.
DPAN:
   Device primary account number - a unique tokenised alias that is associated with the FPAN and assigned to the payment card.
FPAN:
   Financial primary account number - an actual 16-digit card number associated with a payment account.
ODA:
   Offline Data Authentication - in payment transactions allows card and terminal to authenticate offline when real-time online connectivity to the issuer is not available. The card signs dynamic data using its own RSA private key, and the terminal verifies this signature to authenticate the card as legitimate.
PIN:
   Personal Identification Number

## Claims

1. A merchant computing device for processing a transaction between a cardholder computing device and the merchant computing device, the merchant computing device comprising:
a processor; and
a memory storing instructions that, when executed by the processor, cause the processor to:
generate authorisation data comprising a merchant verification code;
send the authorisation data to the cardholder computing device for generating an authorisation request for approval by an issuer associated with the cardholder;
if the authorisation request is approved by the issuer, receive an authorisation approval comprising the authorisation data from the cardholder computing device, wherein the authorisation approval has been generated by the issuer;
verify whether the authorisation data provided within the authorisation approval matches the generated authorisation data;
in dependence on the match being obtained, complete the transaction.

2. **The** merchant computing device of Claim 1, wherein the memory stores instructions that, when executed by the processor, further cause the processor to:
receive the authorisation approval from the cardholder computing device via a face-to-face authorisation contactless transaction.

3. **The** merchant computing device of Claim 2, wherein the memory stores instructions that, when executed by the processor, further cause the processor to:
validate that the cardholder computing device is genuine by performing offline data authentication via a face-to-face validation contactless transaction.

4. The merchant computing device of Claim 3, wherein the validation contactless transaction is performed simultaneously with the authorisation contactless transaction.

5. The merchant computing device of any previous claim, wherein the memory stores instructions that, when executed by the processor, further cause the processor to:
display the authorisation data for user input at the cardholder computing device; or
display a QR code comprising the authorisation data for scanning at the cardholder computing device; or
send the authorisation data to the cardholder computing device via a data contactless transaction using NFC technology.

6. The merchant computing device of any of Claims 1 to 4, wherein the merchant computing device comprises an additional data kernel extension, and wherein the additional data kernel extension is configured to:
send the authorisation data to an additional data extension at the cardholder computing device;
receive the authorisation approval comprising the authorisation data from the additional data extension at the cardholder computing device;
verify whether the authorisation data provided within the authorisation approval matches the generated authorisation data.

7. The merchant computing device of Claim 6, comprising a contactless kernel configured to communicate with a tokenised payment application within a digital wallet of the cardholder computing device, wherein the contactless kernel is configured to perform offline data authentication via a face-to-face validation contactless transaction.

8. The merchant computing device of any of Claims 1 to 4, wherein the memory stores instructions that, when executed by the processor, further cause the processor to:
send the authorisation data to the cardholder computing device using Bluetooth technology; and
receive the authorisation approval from the cardholder computing device using Bluetooth technology.

9. A cardholder computing device for processing a transaction between the cardholder computing device and a merchant computing device, the cardholder computing device comprising:
a processor; and
a memory storing instructions that, when executed by the processor, cause the processor to:
receive authorisation data from the merchant computing device, wherein the authorisation data comprises a merchant verification code, and wherein the authorisation data is generated at the merchant computing device;
generate and send an authorisation request for approval by an issuer associated with the cardholder, wherein the authorisation request comprises the authorisation data;
if the authorisation request is approved by the issuer, receive an authorisation approval comprising the authorisation data from the issuer;
send the authorisation approval to the merchant computing device for verification as to whether the authorisation data provided within the authorisation approval matches the authorisation data generated at the merchant computing device;
in dependence on the match being obtained, the merchant computing device being arranged to complete the transaction.

10. The cardholder computing device of Claim 9, wherein if the authorisation request is approved by the issuer, the authorisation approval comprises an authentication code comprising the authorisation data, wherein the authentication code is generated by the issuer; and
wherein the memory stores instructions that, when executed by the processor, further cause the processor to:
send the authorisation approval to the merchant computing device for validation of the authentication code.

11. The cardholder computing device of Claim 9, wherein if the authorisation request is approved by the issuer, the authorisation approval comprises a digital signature of the authorisation data, the digital signature generated by the issuer; and
wherein the memory stores instructions that, when executed by the processor, further cause the processor to:
send the authorisation approval to the merchant computing device for validation of the digital signature.

12. The cardholder computing device of any of Claims 9 to 11, wherein the memory stores instructions that, when executed by the processor, further cause the processor to:
send the authorisation approval to the merchant computing device via a face-to-face authorisation contactless transaction.

13. The cardholder computing device of any of Claims 9 to 12, wherein the cardholder computing device comprises a digital wallet comprising an additional data extension, and wherein the additional data extension is configured to:
receive authorisation data from an additional data kernel extension at the merchant computing device, wherein the authorisation data is generated at the merchant computing device;
send an authorisation request for approval by the issuer, wherein the authorisation request comprises the authorisation data;
if the authorisation request is approved by the issuer, receive an authorisation approval comprising the authorisation data from the issuer;
send the authorisation approval to the additional data kernel extension at the merchant computing device for verification as to whether the authorisation data provided within the authorisation approval matches the authorisation data generated at the merchant computing device.

14. The cardholder computing device of any of Claims 9 to 12, wherein the memory stores instructions that, when executed by the processor, further cause the processor to receive the authorisation data in any of the following ways:
a) via user input;
b) via a data contactless transaction using NFC technology;
c) via scanning a QR code generated at the merchant computing device;
d) via a data contactless transaction using Bluetooth technology.

15. The cardholder computing device of any of Claims 9 to 14, wherein the authorisation data comprises a purchase amount, time stamp and/or merchant ID.
